# EUROPÄISCHE PATENTANMELDUNG

(11) **EP 4 635 712 A1**
(43) Veröffentlichungstag der Anmeldung: **22.10.2025**
(21) Anmeldenummer: 25170769.1
(22) Anmeldetag: 15.04.2025
(51) Int. Cl.: B29C 48/41, B29C 48/40, B29C 48/25, B29C 48/505, B29C 48/535, B29C 48/92

(54) **EXTRUDERWELLENVORRICHTUNG FÜR EINEN GEGENLÄUFIGEN DOPPELWELLENEXTRUDER**

(30) Priorität: 18.04.2024 DE 102024110958
(71) Anmelder: Ostschweizer Fachhochschule OST.CH, 8640 Rapperswil (CH)
(72) Erfinder: Schwendemann, Daniel, 88630 Pfullendorf (DE); Fässler, Patrick, 8840 Einsiedeln (CH); Thies, Andreas, 91325 Adelshof (DE)
(74) Vertreter: Daub, Thomas

(57) **Zusammenfassung**

Die Erfindung geht aus von einer Extruderwellenvorrichtung für einen gegenläufigen Doppelwellenextruder (12), mit zumindest einer Schneckenwelle (14), welche eine Drehmitnahmekontur (16) aufweist, mit zumindest einem ersten, drehfest auf der Schneckenwelle (14) angeordneten Schneckensegment (18), welches eine erste, zumindest im Wesentlichen konstante Schneckensteigung aufweist, und mit zumindest einem zweiten, drehfest auf der Schneckenwelle (14) angeordneten Schneckensegment (20), welches eine von der ersten Schneckensteigung verschiedene zweite, zumindest im Wesentlichen konstante Schneckensteigung aufweist.

Es wird vorgeschlagen, dass das erste Schneckensegment (18) und das zweite Schneckensegment (20) jeweils eine Stirnseite (22, 24) aufweisen, welche eine zumindest im Wesentlichen identische Form aufweisen.

## Beschreibung

### Stand der Technik

Die Erfindung betrifft eine Extruderwellenvorrichtung für einen gegenläufigen Doppelwellenextruder.

Es ist bereits eine Extruderwellenvorrichtung für einen gegenläufigen Doppelwellenextruder, mit zumindest einer Schneckenwelle, welche eine Drehmitnahmekontur aufweist, mit zumindest einem ersten, drehfest auf der Schneckenwelle angeordneten Schneckensegment, welches eine erste, zumindest im Wesentlichen konstante Schneckensteigung aufweist, und mit zumindest einem zweiten, drehfest auf der Schneckenwelle angeordneten Schneckensegment, welches eine von der ersten Schneckensteigung verschiedene zweite, zumindest im Wesentlichen konstante Schneckensteigung aufweist, vorgeschlagen worden.

Es sind insbesondere bereits segmentierte Extruderwellenvorrichtungen bekannt. Um ein sauberes Ineinandergreifen der Elemente sicherzustellen, sind bei entsprechenden segmentierten Extruderwellenvorrichtungen Distanzscheiben zwischen den Schneckensegmenten verbaut. Distanzringe sowie die abrupt wechselnde Geometrie (Segmentstirnflächen) bilden jedoch große Totzonen im Prozess, was zu einer Schädigung des Materials und somit zu einem fehlerhaften Produkt führt. Die Distanzringe sind notwendig, um eine Kollision während der Rotation zu vermeiden. Allerdings sind es auch Totzonen, wo sich Material ansammeln und degradieren kann. Passfedern und Vielkeilprofile als kraftübertragende Elemente führen zum Nachteil, dass nur ein geringes Moment übertragen bzw. ein kleiner Drehmomentfaktor erreicht werden kann, was vielfach einen wirtschaftlichen Prozess verunmöglicht.

Die Aufgabe der Erfindung besteht insbesondere darin, eine gattungsgemäße Vorrichtung mit verbesserten Eigenschaften hinsichtlich einer Variabilität, sowie einer Wartbarkeit bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Extruderwellenvorrichtung für einen gegenläufigen Doppelwellenextruder, mit zumindest einer Schneckenwelle, welche eine Drehmitnahmekontur aufweist, mit zumindest einem ersten, drehfest auf der Schneckenwelle angeordneten Schneckensegment, welches eine erste, zumindest im Wesentlichen konstante Schneckensteigung aufweist, und mit zumindest einem zweiten, drehfest auf der Schneckenwelle angeordneten Schneckensegment, welches eine von der ersten Schneckensteigung verschiedene zweite, zumindest im Wesentlichen konstante Schneckensteigung aufweist.

Es wird vorgeschlagen, dass das erste Schneckensegment und das zweite Schneckensegment jeweils eine Stirnseite aufweisen, welche eine zumindest im Wesentlichen identische Form aufweisen. Vorzugsweise weisen das erste Schneckensegment und das zweite Schneckensegment jeweils zwei voneinander abgewandte Stirnseiten auf, welche eine zumindest im Wesentlichen identische Form aufweisen. Bevorzugt weisen alle Stirnseiten der beiden Schneckensegmente die gleiche Form auf. Die Stirnseiten erstrecken sich insbesondere in einer Ebene senkrecht zu einer Axialrichtung der Extruderwellenvorrichtung. Die Stirnseiten bilden bevorzugt jeweils ein Ende der Schneckensegmente aus. Die Stirnseiten sind insbesondere eben ausgebildet.

Die Extruderwellenvorrichtung ist insbesondere zumindest ein Teil, bevorzugt zumindest eine Unterbaugruppe, zumindest eines Extruders, insbesondere eines gegenläufigen Doppelwellenextruders. Die Extruderwellenvorrichtung bildet insbesondere einem gesamte Extruderwelle aus. Die Extruderwellenvorrichtung bildet insbesondere eine von zwei Extruderwellen des gegenläufigen Doppelwellenextruders. Vorzugsweise wird die Extruderwellenvorrichtung von einem Antrieb des gegenläufigen Doppelwellenextruders angetrieben. Vorzugsweise ist die Extruderwellenvorrichtung, insbesondere als Teil des gegenläufigen Doppelwellenextruders, zu einem Erfassen, Fördern, Aufschmelzen und/oder Mischen eines Extrudats vorgesehen. Die Extruderwellenvorrichtung ist, bevorzugt zusammen mit einer weiteren Extruderwellenvorrichtung, insbesondere zu einer Extrusion vorgesehen. Die Extrusion bezeichnet das kontinuierliche Aufschmelzen und Austragen von Kunststoffformmassen, mittels formgebender Düse. Nach der anschließenden Kühlung entstehen je nach Anwendung diverse Endprodukte. Grundsätzlich kann ein Extruder sowohl für die Aufbereitung, wie auch für die Verarbeitung verwendet werden. In der Aufbereitung, oder auch der Compoundierung werden Kunststoffe mit Zusatzstoffen gemischt und zu einem Granulat verarbeitet. Mit einem Verarbeitungsextruder hingegen werden insbesondere Halbzeuge wie Profile, Platten, Folien oder dergleichen produziert. Die Extruderwellenvorrichtung ist für einen gegenläufigen Doppelwellenextruder. Für gegenläufig drehende Doppelschnecken haben sich zwei Bauformen etabliert, die konische und die parallele Ausführung. Die parallele Bauform besitzt einen konstanten Schneckendurchmesser und Achsabstand. So ergibt sich auch eine fixe Gangtiefe. Diese Bauform führte jedoch zu einigen Problemen. Durch den engen Achsabstand entsteht ein Platzmangel für die Dimensionierung der Lager auf der Getriebeseite. Die entstehenden Radial- und Axialkräfte konnten früher aus diesem Grund oft nicht ausreichend aufgenommen werden. Dieses Problem wurde mit der Einführung der konischen Bauform gelöst. Hier nehmen der äußere Schneckendurchmesser und der Achsabstand von der Spitze hin zum Getriebe stetig zu. So ergibt sich für die Lagerung mehr Bauraum. Die konischen Schnecken können bezüglich der Gangtiefen nochmals in drei Untergruppen eingeteilt werden. Konische Schnecken sind insbesondere bei kleineren gegenläufigen Extrudern verbreitet. Die Extruderwellenvorrichtung ist insbesondere für einen parallelen gegenläufigen Doppelwellenextruder.

Der gegenläufige Doppelwellenextruder weist insbesondere zwei gegenläufige (gegeneinander laufende) Extruderwellenvorrichtungen mit einer Schneckenkontur auf, mit welchen Kunststoffschüttgüter eingezogen, plastifiziert und in eine Extrusionsdüse gefördert werden. Zur Erhöhung der Prozessflexibilität und des Austauschs bei partiellem Verschleiß ist die Extruderwellenvorrichtung insbesondere segmentiert. Die Kraftübertragung findet vom Antrieb über eine Kupplung insbesondere mittels einer Zahnwelle auf die Segmentverzahnung und die Schneckensegmente statt. Durch die segmentierten Schneckensegmente können die Extruderwellenvorrichtungen für jeden Prozess individuell zusammengestellt werden.

Die Schneckenwelle der Extruderwellenvorrichtung ist insbesondere angetrieben ausgebildet. Vorzugsweise weist die Schneckenwelle eine außenliegende Drehmitnahmekontur auf, welche dazu vorgesehen ist, ein Drehmoment von der Schneckenwelle auf Schneckensegmente zu übertragen. Vorzugsweise sind in einem Betriebszustand mehrere, insbesondere eine Vielzahl, von Schneckensegmenten auf der Schneckenwelle angeordnet. Die Drehmitnahmekontur kann beispielsweise von einer Verzahnung, einer Feder, einem Nutstein oder dergleichen gebildet sein. Vorzugsweise ist die Drehmitnahmekontur von einer Außenverzahnung gebildet. Es sind jedoch auch andere, einem Fachmann als sinnvoll erscheinende Ausgestaltungen der Drehmitnahmekontur denkbar. Bevorzugt ist die Schneckenwelle lediglich einseitig gelagert.

Unter einem "Schneckensegment" soll in diesem Zusammenhang insbesondere ein separat, zerstörungsfrei von der Schneckenwelle trennbares Segment verstanden werden, welches einen axialen Teilbereich einer Schneckenkontur der Extruderwellenvorrichtung ausbildet. Die Extruderwellenvorrichtung weist insbesondere mehrere in axialer Richtung hintereinander angeordnete Schneckensegmente auf, die zusammen eine Schneckengeometrie der Extruderwellenvorrichtung ausbilden. Die Schneckensegmente sind jeweils insbesondere von separaten, voneinander trennbaren Elementen gebildet. Die Schneckensegmente weisen insbesondere eine hohlzylindrische Grundform auf, wobei eine Mantelfläche insbesondere eine Schneckenkontur aufweist. Die Schneckensegmente weisen dazu insbesondere zumindest einen Kamm auf, welcher sich, insbesondere helixartig, über die Mantelfläche erstrecken. Bevorzugt weisen die Schneckensegmente jeweils zumindest zwei Kämme auf, welche sich, insbesondere doppel-helixartig, über die Mantelfläche erstreckt. Unter einer "Stirnseite" soll in diesem Zusammenhang insbesondere eine axiale Vorder- und/oder Rückseite des Schneckensegments verstanden werden. Die Stirnseiten erstrecken sich insbesondere in einer Ebene senkrecht zu einer Axialrichtung der Extruderwellenvorrichtung. Die Stirnseiten bilden bevorzugt jeweils ein Ende der Schneckensegmente aus. Die Stirnseiten sind insbesondere eben ausgebildet.

Unter einer "zumindest im Wesentlichen konstanten Schneckensteigung" soll in diesem Zusammenhang insbesondere verstanden werden, dass die Schneckensteigung einen zumindest im Wesentlichen konstanten Wert aufweist und/oder dass die Schneckensteigung zumindest über einen Großteil einer axialen Erstreckung, insbesondere über zumindest 60%, vorzugsweise über zumindest 70% und besonders bevorzugt über zumindest 80% konstant ist. Bevorzugt kann die Schneckensteigung innerhalb von Herstellungstoleranzen variieren. Ferner soll unter einer "Schneckensteigung" in diesem Zusammenhang insbesondere der axiale Weg verstanden werden, der durch eine Umdrehung eines Schneckenkamms des Schneckensegments zurückgelegt wird. Also der Abstand zwischen zwei Graten desselben Schneckenkamms, insbesondere in mm. Unter "zumindest im Wesentlichen" soll in diesem Zusammenhang insbesondere verstanden werden, dass eine Abweichung von einem vorgegebenen Wert insbesondere weniger als 25%, vorzugsweise weniger als 10% und besonders bevorzugt weniger als 5% des vorgegebenen Werts abweicht.

Unter einer "zumindest im Wesentlichen identischen Form" soll in diesem Zusammenhang insbesondere verstanden werden, dass die Form der Stirnseite des zweiten Schneckensegments in der originalen Skalierung, gespiegelt oder ungespiegelt, zumindest zu 80%, vorzugsweise zumindest zu 90%, bevorzugt zumindest zu 95% und besonders bevorzugt zumindest zu 98% mit der Form der Stirnseite des ersten Schneckensegments übereinstimmt. Bevorzugt ist bei einem Übereinanderlegen der beiden Formen zumindest 90%, bevorzugt zumindest 95% und besonders bevorzugt zumindest 98% der Fläche der Form der Stirnseite des zweiten Schneckensegments deckungsgleich mit der Form der Stirnseite des ersten Schneckensegments.

Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch die erfindungsgemäße Ausgestaltung der Extruderwellenvorrichtung kann insbesondere eine vorteilhaft variable Extruderwellenvorrichtung bereitgestellt werden. Gleichzeitig kann insbesondere eine vorteilhaft hohe Effizienz ermöglicht werden. Es können insbesondere Totzonen vermieden werden. Es kann insbesondere ein vorteilhaft kontinuierlicher Übergang zwischen verschiedenen Schneckengeometrien ermöglicht werden. Durch eine im Wesentlichen identische Stirnfläche ist es möglich, Schneckensegmente mit unterschiedlichen Steigungen, Stegbreiten und -winkeln ohne Totzonen zu kombinieren. Durch die Flexibilität bei der Prozessgestaltung und im Optimieren des Prozesses kann, durch eine segmentierte Extruderwellenvorrichtung, ein deutlicher Mehrwert erzielt werden. Zudem können Schneckenelemente, welche von partiellem Verschleiß betroffen sind, einfach und kosteneffizient ausgetauscht werden. Es kann insbesondere vermieden werden, dass bei der Prozessentwicklung für jede Schneckenänderung ein komplett neues Schneckenpaar angefertigt oder eine spanende Bearbeitung an einem bestehenden vorgenommen wird. Dies ist meist mit langen Lieferzeiten und hohen Kosten verbunden. Zudem muss bei einem partiellen Verschleiß der Schnecken das ganze Schneckenpaar durch ein neues ersetzt werden. Demnach kann insbesondere eine vorteilhaft kosteneffiziente Extruderwellenvorrichtung bereitgestellt werden.

Ferner wird vorgeschlagen, dass das zweite Schneckensegment mit der Stirnseite direkt an die Stirnseite des ersten Schneckensegments angrenzt. Vorzugsweise liegt das zweite Schneckensegment mit der eingangsseitigen Stirnseite direkt an der ausgangsseitigen Stirnseite des ersten Schneckensegments an. Eine Eingangsseite ist dabei insbesondere von einer der die Extruderwellenvorrichtung antreibenden Antriebseinheit zugewandten Seite des Schneckensegments gebildet. Eine Ausgangsseite ist dabei insbesondere von der die Extruderwellenvorrichtung antreibenden Antriebseinheit abgewandten Seite des Schneckensegments gebildet. Vorzugsweise ist das zweite Schneckensegment in axialer Richtung von einer Eingangsseite in Richtung einer Ausgangsseite hinter dem ersten Schneckensegment angeordnet. Bevorzugt weist die Extruderwellenvorrichtung ein drittes Schneckensegment auf, welches direkt an das zweite Schneckensegment angrenzt. Die eingangsseitige Stirnseite des zweiten Schneckensegments liegt insbesondere deckungsgleich direkt an der ausgangsseitigen Stirnseite des ersten Schneckensegments an. Die eingangsseitige Stirnseite des zweiten Schneckensegments kontaktiert die ausgangsseitige Stirnseite des ersten Schneckensegments insbesondere flächig. Dadurch kann insbesondere ein vorteilhafter Übergang von dem ersten Schneckensegment auf das zweite Schneckensegment ermöglicht werden. Es kann insbesondere ein vorteilhaft gleichmäßiger Übergang ermöglicht werden.

Des Weiteren wird vorgeschlagen, dass die aneinander angrenzenden Stirnseiten des ersten Schneckensegments und des zweiten Schneckensegments deckungsgleich übereinander liegen. Die eingangsseitige Stirnseite des zweiten Schneckensegments und die ausgangsseitige Stirnseite des ersten Schneckensegments liegen insbesondere deckungsgleich übereinander. Unter "deckungsgleich" soll in diesem Zusammenhang insbesondere verstanden werden, dass keine der beiden aneinander angrenzenden Stirnseiten über die jeweils andere Stirnseite hinaussteht. Vorzugsweise setzt die Deckungsgleichheit eine passende Montage voraus. Insbesondere müssen die Schneckensegmente jeweils in der gleichen und/oder einer um 180° verdrehten Ausrichtung auf die Schneckenwelle aufgeschoben werden. Dadurch kann insbesondere ein vorteilhafter Übergang von dem ersten Schneckensegment auf das zweite Schneckensegment ermöglicht werden. Es kann insbesondere ein vorteilhaft gleichmäßiger Übergang ermöglicht werden.

Es wird ferner vorgeschlagen, dass das erste Schneckensegment und das zweite Schneckensegment in axialer Richtung jeweils einen Mittenbereich mit einer konstanten Schneckensteigung und einen Übergangsbereich aufweisen, in welchem ein Querschnitt von dem Querschnitt des Mittenbereichs kontinuierlich in einen Querschnitt der Stirnfläche übergeht. Vorzugsweise weisen das erste Schneckensegment und das zweite Schneckensegment in axialer Richtung jeweils einen Mittenbereich mit einer konstanten Schneckensteigung und zwei an beide Seiten des Mittenbereichs angrenzende Übergangsbereichs auf. Es ist insbesondere jeweils ein Übergangsbereich eingangsseitig und ein Übergangsbereich ausgangsseitig angeordnet. Die Übergangsbereiche grenzen insbesondere direkt an die Stirnseiten an. Vorzugsweise sind die Schneckensegmente jeweils in genau drei Bereiche unterteilt, einen eingangsseitigen Übergangsbereich, einen Mittenbereich, welcher direkt an den eingangsseitigen Übergangsbereich angrenzt, und einen ausgangsseitigen Übergangsbereich, welcher direkt an den Mittenbereich angrenzt. Die Übergangsbereiche weisen vorzugsweise eine identische axiale Erstreckung auf. Der Mittenbereich weist insbesondere eine axiale Erstreckung auf, welche zumindest 50%, vorzugsweise zumindest 65% und besonders bevorzugt zumindest 80% einer axialen Erstreckung des jeweiligen Schneckensegments entspricht. Die Übergangsbereiche weisen jeweils insbesondere eine axiale Erstreckung auf, welche maximal 40%, vorzugsweise maximal 30% und besonders bevorzugt maximal 20% einer axialen Erstreckung des jeweiligen Schneckensegments entspricht. Dadurch kann insbesondere ein vorteilhafter Übergang von dem ersten Schneckensegment auf das zweite Schneckensegment ermöglicht werden. Hierdurch können insbesondere vorteilhaft identische Stirnseiten ermöglicht werden. Es kann insbesondere ein Übergang geschaffen werden, in welchem ein Querschnitt von dem Querschnitt des Mittenbereichs kontinuierlich in einen Querschnitt der Stirnfläche übergeht. Hierdurch kann eine kontinuierliche Schneckengeometrie unabhängig von den verschiedenen Schneckensteigungen der Schneckensegmente ermöglicht werden.

Es wird weiter vorgeschlagen, dass der Querschnitt des ersten Schneckensegments in dem Mittenbereich wesentlich von dem Querschnitt des zweiten Schneckensegments in dem Mittenbereich verschieden ist, wobei der Querschnitt der Stirnfläche von dem Querschnitt des ersten Schneckensegments in dem Mittenbereich und dem Querschnitt des zweiten Schneckensegments in dem Mittenbereich verschieden ist. Der Querschnitt der Stirnflächen bildet insbesondere einen gemittelten Querschnitt aller Querschnitte der Mittenbereiche der zur Verfügung stehenden Schneckensegmente. Der Querschnitt der Stirnflächen entspricht insbesondere einem Querschnitt des Mittenbereichs eines Schneckensegments mit einer mittleren Steigung. Dadurch kann insbesondere eine Stirnseite bereitgestellt werden, welche individuell für alle Schneckensegmente mit allen Schneckensteigungen nutzbar ist.

Zudem wird vorgeschlagen, dass eine axiale Erstreckung der Übergangsbereiche der Schneckensegmente jeweils maximal 10% eines Durchmessers des jeweiligen Schneckensegments beträgt. Vorzugsweise beträgt eine axiale Erstreckung der Übergangsbereiche der Schneckensegmente jeweils zwischen 5% und 10% eines Nenndurchmessers des jeweiligen Schneckensegments. Dadurch kann insbesondere ein Übergangsbereich bereitgestellt werden, welcher vorteilhaft kompakt ist und lediglich einen geringen Einfluss auf ein Extrusionsergebnis hat und trotz allem einen vorteilhaften Übergang schafft.

Ferner wird vorgeschlagen, dass die Stirnseite des ersten Schneckensegments und des zweiten Schneckensegments jeweils eine kreisförmige Grundform mit auf beiden Seiten herausragenden rechteckigen Ausformungen aufweist. In einem Zentrum der Stirnseiten ist insbesondere jeweils eine im Wesentlichen kreisförmige Ausnehmung angeordnet, welche zu einer Aufnahme der Schneckenwelle dient. In der Ausnehmung können zusätzlich Zähne zu einer Verzahnung mit der Schneckenwelle vorgesehen sein. Dadurch kann insbesondere eine Stirnseite bereitgestellt werden, welche individuell für alle Schneckensegmente mit allen Schneckensteigungen nutzbar ist.

Des Weiteren wird vorgeschlagen, dass das erste Schneckensegment und das zweite Schneckensegment jeweils zwei Schneckenkämme aufweisen. Das erste Schneckensegment und das zweite Schneckensegment sind insbesondere jeweils zweigängig. Bevorzugt weisen die Schneckensegmente jeweils zumindest zwei Schneckenkämme auf, welche sich, insbesondere doppel-helixartig, über die Mantelfläche erstrecken. Hierdurch können insbesondere vorteilhaft Schneckensegmente zur Druckerzeugung, zum Pumpen und/oder zum Aufschmelzen bereitgestellt werden. Ferner kann dabei insbesondere vorteilhaft eine identische Stirnseite realisiert werden. Es wäre jedoch auch denkbar, dass das erste Schneckensegment und das zweite Schneckensegment jeweils dreigängig ausgebildet sind.

Es wird ferner vorgeschlagen, dass die Extruderwellenvorrichtung ein weiteres Schneckensegment aufweist, welches drehfest auf der Schneckenwelle angeordnet ist und welches einen Schneckenkamm aufweist. Das weitere Schneckensegment ist in axialer Richtung der Extruderwellenvorrichtung insbesondere vor dem ersten Schneckensegment und dem zweiten Schneckensegment angeordnet. Das weitere Schneckensegment ist insbesondere eingängig. Bevorzugt weist das weitere Schneckensegment einen Schneckenkamm auf, welcher sich, insbesondere helixartig, über die Mantelfläche erstreckt. Hierdurch kann insbesondere ein Mischsegment bereitgestellt werden. Es wäre jedoch auch denkbar, dass das weitere Schneckensegment zweigängig oder dreigängig ausgebildet ist.

Es wird weiter vorgeschlagen, dass die Schneckenwelle von einer Zahnwelle gebildet ist. Dadurch kann insbesondere eine vorteilhafte Drehmomentübertragung ermöglicht werden.

Ferner wird vorgeschlagen, dass die Schneckenwelle dazu vorgesehen ist, ein Antriebsmoment direkt auf die Schneckensegmente zu übertragen, wobei ein Drehmomentfaktor mehr als 16Nm/cm³ beträgt. Der Drehmomentfaktor, insbesondere auch spezifisches Drehmoment oder auch Drehmomentdichte genannt, dient insbesondere zu einem größenunabhängigen Vergleich der Drehmomentdichte von Getriebe und Doppelwellenextrudern. Die Drehmomentübertragung vom Antrieb auf das Getriebe erfolgt insbesondere über eine Kupplung auf die als Zahnwelle ausgebildete Schneckenwelle. Die Schneckenwelle überträgt die Drehbewegung und Momente auf die Innenverzahnung der Schneckensegmente. Die axial entstehende Kraft wird über die Segmente auf die Kupplung und auf die Getriebewellen und deren Lagerung abgestützt, wie dies auch bei Monolitschnecken (Schnecken aus einem Stück) der Fall ist. Historisch bedingt wird bei den gleichläufigen Zweischneckenextrudern das Drehmoment für eine Welle zur Berechnung des Drehmomentfaktors verwendet. Für die gleichläufigen Doppelwellenextruder wird häufig das Gesamtdrehmoment zur Berechnung des Drehmomentfaktors verwendet. Das Ergebnis suggeriert, dass gegenläufige Doppelwellenextruder einen doppelt so hohen Drehmomentfaktor erreichen, was so nicht stimmt. Werden zur Berechnung des Drehmomentfaktors die gleichen Grundlagen verwendet, liegen die Drehmomentfaktoren im Bereich der bereits segmentierten gleichläufigen Doppelwellenextruder. Aufgrund dieser Betrachtung ist eine Machbarkeit der Segmentierung von Gegenläuferschnecken mit einem Drehmomentfaktor über 16Nm/cm³, bei einer Berechnung des Drehmoments pro Welle bzw. über 32Nm/cm³ bei einer Berechnung des Gesamtdrehmoments des gegenläufigen Doppelwellenextruders gegeben. Dadurch kann insbesondere eine vorteilhaft hohe Leistungsfähigkeit ermöglicht werden.

Ferner schlägt die Erfindung insbesondere einen gegenläufigen Doppelwellenextruder vor, mit einem Gehäuse, mit zwei Extruderwellenvorrichtungen und mit zumindest einer Antriebseinheit zu einem Antrieb der Extruderwellenvorrichtungen. Die Erfindung betrifft insbesondere einen gegenläufigen Doppelwellenextruder zum Plastifizieren von Kunststoffschüttgütern, mit einem Einzug und einer formgebenden Düse als Auslass und zwischen diesen, Schnecken mit in der Länge sich ändernden Geometrie zum Einziehen, Aufschmelzen, Entgasen, Homogenisieren und Druck aufbauen. Die Antriebseinheit ist insbesondere von einem Motor, bevorzugt einem Elektromotor, gebildet. Es sind jedoch auch andere, einem Fachmann als sinnvoll erscheinende Ausbildungen der Antriebseinheit denkbar. Ferner wäre denkbar, dass ein zwischen der Antriebseinheit und den Extruderwellenvorrichtungen angeordnetes Getriebe vorgesehen ist. Das Gehäuse begrenzt insbesondere zwei ineinander übergehende, kreiszylindrische Aufnahmebereiche zur Aufnahme der Extruderwellenvorrichtungen.

Des Weiteren wird vorgeschlagen, dass das erste Schneckensegment und das zweite Schneckensegment der Extruderwellenvorrichtungen dichtkämmend ausgebildet sind. Eine dichtkämmende gegenläufige Doppelschnecke ist bezüglich der Förderung, ein sowohl in axialer Richtung, wie auch in radialer Richtung geschlossenes System. Es entsteht eine geschlossene Kammer. Die Form dieser Kammer entspricht einem aufgebogenen C. Durch die Rotation der Schnecken wird das in der Kammer befindliche Material zur Schneckenspitze befördert. Das Material kann sich aufgrund des geringen Kopfspiels nur in kleinen Mengen mit benachbarten Kammern vermischen. Aus diesem Grund spricht man hierbei von einer Zwangsförderung. Dieses Prinzip führt zu einer kurzen Verweilzeit mit enger Verweilzeitstreuung.

Ferner geht die Erfindung aus von einem Modulbaukasten für eine Extruderwellenvorrichtung, mit zumindest fünf verschiedenen Schneckensegmenten mit unterschiedlichen Schneckensteigungen, wobei die Schneckensegmente jeweils eine Stirnseite aufweisen, welche eine zumindest im Wesentlichen identische Form aufweist.

Die verschiedenen Schneckensegmente sind insbesondere dazu vorgesehen, zu einer individuellen Extruderwellenvorrichtung zusammengefügt zu werden. Auf der Schneckenwelle der Extrudervorrichtung können sehr flexibel Förder-, Scher- und Mischelemente miteinander kombiniert werden. So kann für den zu verarbeiteten Kunststoff die geeignete Schnecke dafür gebildet werden.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen gegenläufigen Doppelwellenextruder mit einem Gehäuse, mit zwei erfindungsgemäßen Extruderwellenvorrichtungen mit zumindest einer Antriebseinheit in einer schematischen Darstellung,
- Fig. 2: den gegenläufigen Doppelwellenextruder mit dem Gehäuse, mit den zwei erfindungsgemäßen Extruderwellenvorrichtungen mit der Antriebseinheit in einer schematischen Schnittdarstellung,

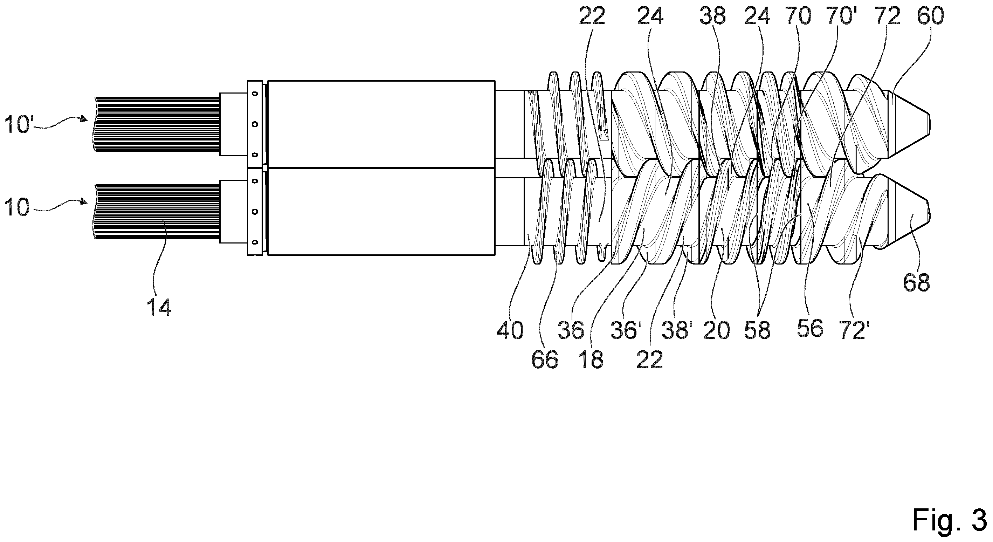

- Fig. 3: die zwei erfindungsgemäßen Extruderwellenvorrichtungen jeweils mit einer Schneckenwelle und einer Vielzahl von Schneckensegmenten in einer schematischen Darstellung,

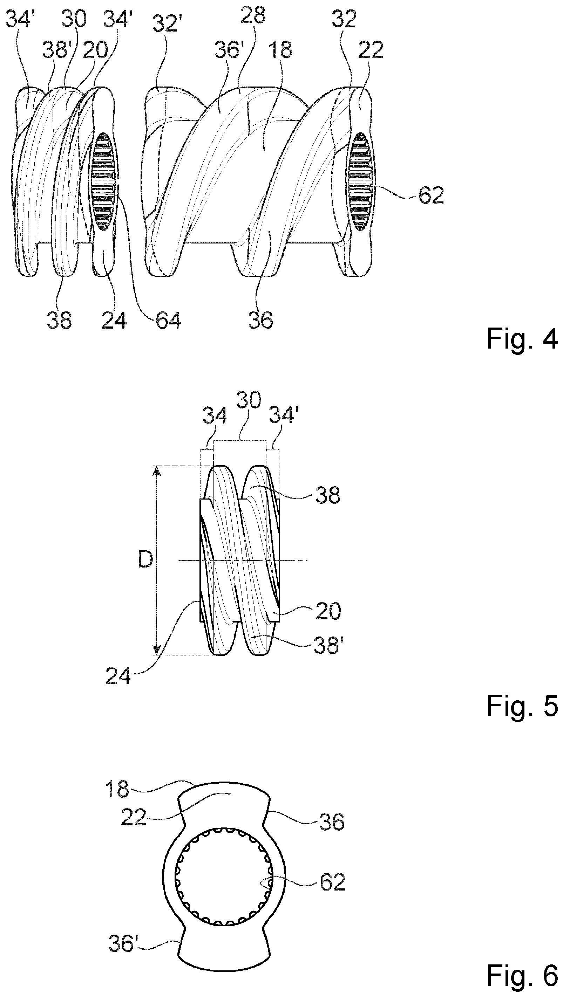

- Fig. 4: ein erstes Schneckensegment und ein zweites Schneckensegment der erfindungsgemäßen Extruderwellenvorrichtung in einer schematischen Darstellung,
- Fig. 5: das erste Schneckensegment der erfindungsgemäßen Extruderwellenvorrichtung mit zwei Übergangsbereichen und einem Mittenbereich in einer schematischen Seitenansicht und
- Fig. 6: das erste Schneckensegment der erfindungsgemäßen Extruderwellenvorrichtung in einer schematischen Frontalansicht auf eine Stirnseite.

### Beschreibung des Ausführungsbeispiels

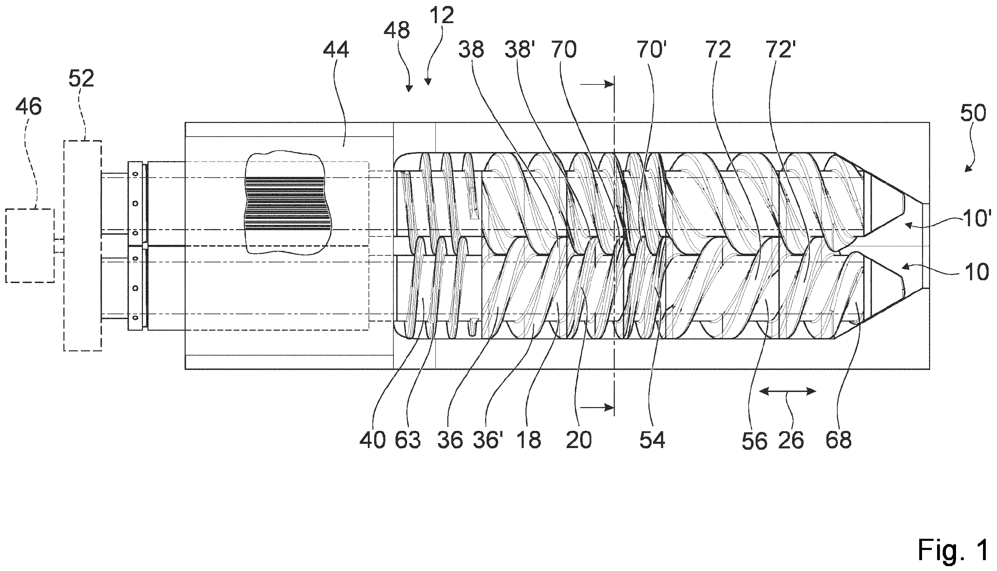

Die Figur 1 zeigt einen gegenläufigen Doppelwellenextruder 12. Der gegenläufige Doppelwellenextruder 12 ist zum Plastifizieren von Kunststoffschüttgütern, mit einem Einzug 48 und einer formgebenden Düse 50 als Auslass. Ferner weist der Doppelwellenextruder 12 zwei Extruderwellenvorrichtungen 10, 10' auf. Die Extruderwellenvorrichtungen 10, 10' sind entlang des Einzugs 48 bis zu der Düse 50 angeordnet. Die Extruderwellenvorrichtungen 10, 10' weist in der Länge sich ändernde Geometrien zum Einziehen, Aufschmelzen, Entgasen, Homogenisieren und Druck-Aufbauen auf. Ferner weist der Doppelwellenextruder 12 zumindest eine Antriebseinheit 46 zu einem Antrieb der Extruderwellenvorrichtungen 10, 10' auf. Die Antriebseinheit 46 ist von einem Motor, bevorzugt einem Elektromotor, gebildet. Es sind jedoch auch andere, einem Fachmann als sinnvoll erscheinende Ausbildungen der Antriebseinheit 46 denkbar. Ferner weist der Doppelwellenextruder 12 ein Getriebe 52 auf. Über das Getriebe 52 wird eine Antriebskraft der Antriebseinheit 46 auf die Extruderwellenvorrichtungen 10, 10' übertragen. Über das Getriebe 52 werden die Extruderwellenvorrichtungen 10, 10' in entgegengesetzter Richtung angetrieben. Alternativ wäre jedoch auch denkbar, dass zwei Antriebseinheiten 46 vorgesehen sind, wobei jede Antriebseinheit 46 eine der Extruderwellenvorrichtungen 10, 10' antreibt. Zudem weist der Doppelwellenextruder 12 ein Gehäuse 44 auf. Gehäuse 44 begrenzt zwei ineinander übergehende, kreiszylindrische Aufnahmebereiche zur Aufnahme der Extruderwellenvorrichtungen 10, 10'.

Die beiden Extruderwellenvorrichtungen 10, 10' sind spiegelsymmetrisch ausgebildet. Ansonsten sind die Extruderwellenvorrichtungen 10, 10' identisch ausgebildet, sodass im Folgenden lediglich die erste Extruderwellenvorrichtung 10 im Detail beschrieben wird. Die Beschreibungen sind dabei jedoch grundsätzlich auch auf die zweite Extruderwellenvorrichtung 10' anwendbar.

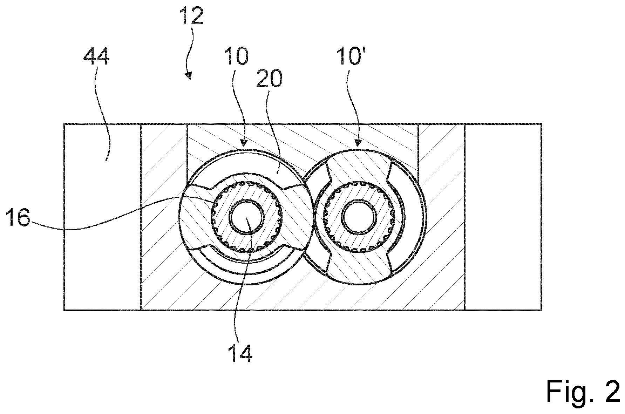

Die Extruderwellenvorrichtung 10 weist eine Schneckenwelle 14 auf, welche eine Drehmitnahmekontur 16 aufweist. Die Schneckenwelle 14 ist direkt mit einer Abtriebsseite des Getriebes 52 gekoppelt. Die Schneckenwelle 14 ist von einer Zahnwelle gebildet. Es wäre jedoch auch eine andere, einem Fachmann als sinnvoll erscheinende Ausbildung der Schneckenwelle 14 denkbar. Die Drehmitnahmekontur 16 ist von einer Außenverzahnung gebildet. Die Extruderwellenvorrichtung 10 weist ferner mehrere, drehfest auf der Schneckenwelle 14 angeordnete Segmente auf (vgl. Figur 2).

Die Extruderwellenvorrichtung 10 weist zumindest ein erstes, drehfest auf der Schneckenwelle 14 angeordnetes Schneckensegment 18 auf, welches eine erste, zumindest im Wesentlichen konstante Schneckensteigung aufweist. Die Extruderwellenvorrichtung 10 weist beispielhaft genau ein erstes, drehfest auf der Schneckenwelle 14 angeordnetes Schneckensegment 18 auf. Es wäre jedoch auch denkbar, dass auf der Schneckenwelle 14 mehrere erste Schneckensegmente 18 angeordnet sind. Ferner weist die Extruderwellenvorrichtung 10 zumindest ein zweites, drehfest auf der Schneckenwelle 14 angeordnetes Schneckensegment 20 auf, welches eine von der ersten Schneckensteigung verschiedene zweite, zumindest im Wesentlichen konstante Schneckensteigung aufweist. Die Extruderwellenvorrichtung 10 weist beispielhaft genau ein zweites, drehfest auf der Schneckenwelle 14 angeordnetes Schneckensegment 20 auf. Es wäre jedoch auch denkbar, dass auf der Schneckenwelle 14 mehrere zweite Schneckensegmente 20 angeordnet sind. Des Weiteren weist die Extruderwellenvorrichtung 10 zumindest ein drittes, drehfest auf der Schneckenwelle 14 angeordnetes Schneckensegment 54 auf, welches eine von der ersten Schneckensteigung und der zweiten Schneckensteigung verschiedene dritte, zumindest im Wesentlichen konstante Schneckensteigung aufweist. Die Extruderwellenvorrichtung 10 weist beispielhaft genau ein drittes, drehfest auf der Schneckenwelle 14 angeordnetes Schneckensegment 54 auf. Es wäre jedoch auch denkbar, dass auf der Schneckenwelle 14 mehrere dritte Schneckensegmente 54 angeordnet sind. Zudem weist die Extruderwellenvorrichtung 10 zumindest ein viertes, drehfest auf der Schneckenwelle 14 angeordnetes Schneckensegment 56 auf, welches eine von der ersten Schneckensteigung, der zweiten Schneckensteigung und der dritten Schneckensteigung verschiedene vierte, zumindest im Wesentlichen konstante Schneckensteigung aufweist. Die Extruderwellenvorrichtung 10 weist beispielhaft genau ein viertes, drehfest auf der Schneckenwelle 14 angeordnetes Schneckensegment 56 auf. Es wäre jedoch auch denkbar, dass auf der Schneckenwelle 14 mehrere vierte Schneckensegmente 56 angeordnet sind.

Das erste Schneckensegment 18 und das zweite Schneckensegment 20 weisen jeweils eine Stirnseite 22, 24 auf, welche eine zumindest im Wesentlichen identische Form aufweisen. Das erste Schneckensegment 18, das zweite Schneckensegment 20, das dritte Schneckensegment 54 und das vierte Schneckensegment 56 weisen jeweils eine Stirnseite 22, 24, 58, 60 auf, welche eine zumindest im Wesentlichen identische Form aufweisen. Die Schneckensegmente 18, 20, 54, 56 weisen jeweils zwei voneinander abgewandte Stirnseiten 22, 24, 58, 60 auf, welche eine zumindest im Wesentlichen identische Form aufweisen. Bevorzugt weisen alle Stirnseiten 22, 24, 58, 60 der Schneckensegmente 18, 20, 54, 56, insbesondere des ersten Schneckensegments 18, des zweiten Schneckensegments 20, des dritten Schneckensegments 54 und des vierten Schneckensegments 56, die gleiche Form auf. Die Stirnseiten 22, 24, 58, 60 erstrecken sich in einer Ebene senkrecht zu einer Axialrichtung der Extruderwellenvorrichtung 10. Die Stirnseiten 22, 24, 58, 60 bilden jeweils die Enden der Schneckensegmente 18, 20, 54, 56 aus. Die Stirnseiten 22, 24, 58, 60 sind eben ausgebildet.

Die Stirnseiten 22, 24, 58, 60 der Schneckensegmente 18, 20, 54, 56 weisen jeweils eine kreisförmige Grundform mit auf gegenüberliegenden Seiten herausragenden, trapezförmigen und/oder rechteckigen Fortsätzen auf. In einem Zentrum der Stirnseiten 22, 24, 58, 60 ist jeweils eine im Wesentlichen kreisförmige Ausnehmung 62, 64 angeordnet, welche zu einer Aufnahme der Schneckenwelle 14 dient. Die Ausnehmungen 62, 64 erstrecken sich in axialer Richtung 26 jeweils durch das gesamte Schneckensegment 18, 20, 54, 56. Die Schneckensegmente 18, 20, 54, 56 weisen in der Ausnehmung 62, 64 jeweils eine Innenverzahnung auf, welche dazu vorgesehen ist, in die Außenverzahnung der Schneckenwelle 14 einzugreifen. Die Innenverzahnungen sind jeweils dazu vorgesehen, mit der Drehmitnahmekontur 16 der Schneckenwelle 14 zusammenzuwirken.

Das zweite Schneckensegment 20 grenzt mit der Stirnseite 24 direkt an die Stirnseite 22 des ersten Schneckensegments 18 an. Das zweite Schneckensegment 20 liegt mit der eingangsseitigen Stirnseite 24 direkt an der ausgangsseitigen Stirnseite 22 des ersten Schneckensegments 18 an. Eine Eingangsseite ist dabei von der der die Extruderwellenvorrichtung 10 antreibenden Antriebseinheit 46 zugewandten Seite des jeweiligen Schneckensegments 18, 20, 54, 56 gebildet. Eine Ausgangsseite ist dabei von der die Extruderwellenvorrichtung 10 antreibenden Antriebseinheit 46 abgewandten Seite des jeweiligen Schneckensegments 18, 20, 54, 56 gebildet. Das zweite Schneckensegment 20 ist in axialer Richtung 26 von einer Eingangsseite in Richtung einer Ausgangsseite hinter dem ersten Schneckensegment 18 angeordnet. Das dritte Schneckensegment 54 grenzt direkt an das zweite Schneckensegment 20 an. Das dritte Schneckensegment 54 ist in axialer Richtung 26 von einer Eingangsseite in Richtung einer Ausgangsseite hinter dem zweiten Schneckensegment 20 angeordnet. Das vierte Schneckensegment 56 grenzt direkt an das dritte Schneckensegment 54 an. Das vierte Schneckensegment 56 ist in axialer Richtung 26 von einer Eingangsseite in Richtung einer Ausgangsseite hinter dem dritten Schneckensegment 54 angeordnet. Die eingangsseitige Stirnseite 24 des zweiten Schneckensegments 20 liegt insbesondere deckungsgleich direkt an der ausgangsseitigen Stirnseite 22 des ersten Schneckensegments 18 an. Die eingangsseitige Stirnseite 24 des zweiten Schneckensegments kontaktiert die ausgangsseitige Stirnseite 22 des ersten Schneckensegments 18 insbesondere flächig. Die Schneckensegmente 18, 20, 54, 56 grenzen mit ihren Stirnseiten 22, 24, 58, 60 direkt an die Stirnseiten 22, 24, 58, 60 benachbarter Schneckensegmente 18, 20, 54, 56 an.

Die aneinander angrenzenden Stirnseiten 22, 24 des ersten Schneckensegments 18 und des zweiten Schneckensegments 20 liegen deckungsgleich übereinander. Die jeweils aneinander angrenzenden Stirnseiten 22, 24, 58, 60 der Schneckensegmente 18, 20, 54, 56 liegen deckungsgleich übereinander. Die eingangsseitige Stirnseite 24 des zweiten Schneckensegments 20 und die ausgangsseitige Stirnseite 22 des ersten Schneckensegments 18 liegen insbesondere deckungsgleich übereinander. Die eingangsseitige Stirnseite 58 des dritten Schneckensegments 54 und die ausgangsseitige Stirnseite 24 des zweiten Schneckensegments 20 liegen insbesondere deckungsgleich übereinander. Die eingangsseitige Stirnseite 60 des vierten Schneckensegments 56 und die ausgangsseitige Stirnseite 58 des dritten Schneckensegments 54 liegen insbesondere deckungsgleich übereinander.

Zumindest das erste Schneckensegment 18 und das zweite Schneckensegment 20 weisen in axialer Richtung 26 jeweils einen Mittenbereich 28, 30 mit einer konstanten Schneckensteigung und einen Übergangsbereich 32, 32', 34, 34' auf, in welchem ein Querschnitt von dem Querschnitt des Mittenbereichs 28, 30 kontinuierlich in einen Querschnitt der Stirnseite 22, 24 übergeht. Die vier Schneckensegmente 18, 20, 54, 56 weisen in axialer Richtung 26 jeweils einen Mittenbereich 28, 30 mit einer konstanten Schneckensteigung und einen Übergangsbereich 32, 32', 34, 34' auf, in welchem ein Querschnitt von dem Querschnitt des Mittenbereichs 28, 30 kontinuierlich in einen Querschnitt der Stirnseite 22, 24 übergeht.

Die vier Schneckensegmente 18, 20, 54, 56 weisen in axialer Richtung 26 jeweils einen Mittenbereich 28, 30 mit einer konstanten Schneckensteigung und zwei an beide Seiten des Mittenbereichs 28, 30 angrenzende Übergangsbereiche 32, 32', 34, 34' auf. Es ist jeweils ein Übergangsbereich 32, 34 eingangsseitig und ein Übergangsbereich 32', 34' ausgangsseitig der Schneckensegmente 18, 20, 54, 56 angeordnet. Die Übergangsbereiche 32, 32', 34, 34' grenzen direkt an die Stirnseiten 22, 24, 58, 60 an. Die vier Schneckensegmente 18, 20, 54, 56 sind jeweils in genau drei Bereiche unterteilt, einen eingangsseitigen Übergangsbereich 32, 34, einen Mittenbereich 28, 30, welcher direkt an den eingangsseitigen Übergangsbereich 32, 34 angrenzt, und einen ausgangsseitigen Übergangsbereich 32', 34', welcher direkt an den Mittenbereich 28, 30 angrenzt. Die Übergangsbereiche 32, 32', 34, 34' weisen zumindest je Schneckensegment 18, 20, 54, 56 eine identische axiale Erstreckung auf. Die Übergangsbereiche 32, 32', 34, 34' weisen eine identische axiale Erstreckung auf. Die Mittenbereiche 28, 30 der Schneckensegmente 18, 20, 54, 56 weisen eine axiale Erstreckung auf, welche zumindest 50%, vorzugsweise zumindest 65% und besonders bevorzugt zumindest 80% einer axialen Erstreckung des jeweiligen Schneckensegments 18, 20, 54, 56 entspricht. Der Querschnitt des ersten Schneckensegments 18 in dem Mittenbereich 28 ist wesentlich von dem Querschnitt des zweiten Schneckensegments 20 in dem Mittenbereich 30 verschieden, wobei der Querschnitt der Stirnseiten 22, 24 von dem Querschnitt des ersten Schneckensegments 18 in dem Mittenbereich 28 und dem Querschnitt des zweiten Schneckensegments 20 in dem Mittenbereich 30 verschieden ist. Der Querschnitt der vier Schneckensegmente 18, 20, 54, 56 ist in den Mittenbereichen 28, 30 jeweils voneinander verschieden, wobei der Querschnitt der Stirnseiten 22, 24, 58, 60 der vier Schneckensegmente 18, 20, 54, 56 von dem Querschnitt der Mittenbereiche 28, 30 der vier Schneckensegmente 18, 20, 54, 56 verschieden ist. Es wäre jedoch auch denkbar, dass der Querschnitt der vier Schneckensegmente 18, 20, 54, 56 in den Mittenbereichen 28, 30 zumindest teilweise identisch ist. Insbesondere wäre auch denkbar, dass mehrere identische Schneckensegmente 18, 20, 54, 56 eingesetzt sind.

Eine axiale Erstreckung der Übergangsbereiche 32, 32', 34, 34' der Schneckensegmente 18, 20, 54, 56 beträgt jeweils maximal 10% eines Durchmessers des jeweiligen Schneckensegments 18, 20, 54, 56. Eine axiale Erstreckung der Übergangsbereiche 32, 32', 34, 34' der Schneckensegmente 18, 20, 54, 56 beträgt jeweils zwischen 5% und 10% eines Nenndurchmessers D des jeweiligen Schneckensegments 18, 20, 54, 56. Die axiale Erstreckung der Übergangsbereiche 32, 32', 34, 34' der Schneckensegmente 18, 20, 54, 56 beträgt beispielhaft 5 mm bei einem Nenndurchmesser D von 72 mm des jeweiligen Schneckensegments 18, 20, 54, 56.

Das erste Schneckensegment 18 und das zweite Schneckensegment 20 weisen jeweils zwei Schneckenkämme 36, 36', 38, 38', 70, 70', 72, 72' auf. Das erste Schneckensegment 18, das zweite Schneckensegment 20, das dritte Schneckensegment 54 und das vierte Schneckensegment 56 weisen jeweils zwei Schneckenkämme 36, 36', 38, 38', 70, 70', 72, 72' auf. Die vier Schneckensegmente 18, 20, 54, 56 sind insbesondere jeweils zweigängig ausgebildet. Die vier Schneckensegmente 18, 20, 54, 56 weisen jeweils zwei Schneckenkämme 36, 36', 38, 38', 70, 70', 72, 72' auf, welche sich, insbesondere doppel-helixartig, über die Mantelfläche einen zylindrischen Grundkörpers der Schneckensegmente 18, 20, 54, 56 erstrecken.

Das erste Schneckensegment 18 und das zweite Schneckensegment 20 der Extruderwellenvorrichtungen 10, 10' sind dichtkämmend ausgebildet. Die vier Schneckensegmente 18, 20, 54, 56 der Extruderwellenvorrichtungen 10, 10' sind dichtkämmend ausgebildet. Das erste Schneckensegment 18 der Extruderwellenvorrichtung 10 kämmt dicht mit dem ersten Schneckensegment 18 der parallelen Extruderwellenvorrichtung 10'. Das zweite Schneckensegment 20 der Extruderwellenvorrichtung 10 kämmt dicht mit dem zweiten Schneckensegment 20 der parallelen Extruderwellenvorrichtung 10'. Das dritte Schneckensegment 54 der Extruderwellenvorrichtung 10 kämmt dicht mit dem dritten Schneckensegment 54 der parallelen Extruderwellenvorrichtung 10'. Das vierte Schneckensegment 56 der Extruderwellenvorrichtung 10 kämmt dicht mit dem vierten Schneckensegment 56 der parallelen Extruderwellenvorrichtung 10'.

Ferner weist die Extruderwellenvorrichtung 10 ein weiteres Schneckensegment 40 auf, welches drehfest auf der Schneckenwelle 14 angeordnet ist und welches einen Schneckenkamm 66 aufweist. Das weitere Schneckensegment 40 ist eingangsseitig des ersten Schneckensegments 18 angeordnet. Das weitere Schneckensegment 40 weist eine Stirnseite auf, welche von den Stirnseiten 22, 24, 58, 60 der vier Schneckensegmente 18, 20, 54, 56 verschieden ist. Das weitere Schneckensegment 40 ist in axialer Richtung 26 der Extruderwellenvorrichtung 10 vor dem ersten Schneckensegment 18, dem zweiten Schneckensegment 20, dem dritten Schneckensegment 54 und dem vierten Schneckensegment 56 angeordnet. Das weitere Schneckensegment 40 ist eingängig. Das weitere Schneckensegment 40 weist einen Schneckenkamm 66 auf, welcher sich, insbesondere helixartig, über die Mantelfläche eines zylindrischen Grundkörpers des Schneckensegments 40 erstreckt. Das weitere Schneckensegment 40 dient beispielhaft zu einer rückwärtigen Abdichtung. Das weitere Schneckensegment 40 ist insbesondere von einem Abstausegment gebildet.

Die Schneckenwelle 14 ist dazu vorgesehen, ein Antriebsmoment direkt auf die Schneckensegmente 18, 20, 40, 54, 56 zu übertragen, wobei ein Drehmomentfaktor mehr als 16Nm/cm³ beträgt. Die Drehmomentübertragung von der Antriebseinheit 46 auf das Getriebe 52 erfolgt insbesondere über eine Kupplung auf die als Zahnwelle ausgebildete Schneckenwelle 14. Die Schneckenwelle 14 überträgt die Drehbewegung und Momente auf die Innenverzahnung der Schneckensegmente 18, 20, 40, 54, 56. Die axial entstehende Kraft wird über die Schneckensegmente 18, 20, 40, 54, 56 auf die Kupplung und auf die Getriebewellen und deren Lagerung abgestützt, wie dies auch bei Monolitschnecken der Fall ist.

Des Weiteren weist die Extruderwellenvorrichtung 10 eine Spitze 68 auf, welche auf ein vorderes Ende der Schneckenwelle 14 aufgeschraubt ist. Die Spitze 68 ragt in die Düse 50. Die Spitze 68 weist einen Grundkörper mit einer Kegelstumpfform auf. Die Spitze 68 weist an einem eingangsseitigen Ende einen nicht weiter sichtbaren Gewindebolzen auf. Der Gewindebolzen ist dazu vorgesehen, in eine Gewindeausnehmung der Schneckenwelle 14 auf der ausgangsseitigen Stirnseite der Schneckenwelle 14 eingeschraubt zu werden.

Die Extruderwellenvorrichtungen 10, 10' sind aus einem Modulbaukasten für eine Extruderwellenvorrichtung 10, 10' zusammensetzbar. Der Modulbaukasten weist beispielhaft zumindest fünf verschiedene Schneckensegmente 18, 20, 54, 56 mit unterschiedlichen Schneckensteigungen auf, wobei die Schneckensegmente 18, 20, 54, 56 jeweils eine Stirnseite 22, 24, 58, 60 aufweisen, welche eine zumindest im Wesentlichen identische Form aufweist. Ferner enthält der Modulbaukasten weitere Schneckensegmente 40. Die verschiedenen Schneckensegmente 18, 20, 40, 54, 56 sind dazu vorgesehen, zu einer individuellen Extruderwellenvorrichtung 10, 10' zusammengefügt zu werden. Auf der Schneckenwelle 14 der Extruderwellenvorrichtung 10, 10' können sehr flexibel Förder-, Knet- und Mischelemente miteinander kombiniert werden.

### Bezugszeichenliste

- 10: Extruderwellenvorrichtung
- 12: Doppelwellenextruder
- 14: Schneckenwelle
- 16: Drehmitnahmekontur
- 18: Schneckensegment
- 20: Schneckensegment
- 22: Stirnseite
- 24: Stirnseite
- 26: Richtung
- 28: Mittenbereich
- 30: Mittenbereich
- 32: Übergangsbereich
- 32': Übergangsbereich
- 34: Übergangsbereich
- 34': Übergangsbereich
- 36: Schneckenkamm
- 36': Schneckenkamm
- 38: Schneckenkamm
- 38': Schneckenkamm
- 40: Schneckensegment
- 42: Schneckenkamm
- 44: Gehäuse
- 46: Antriebseinheit
- 48: Einzug
- 50: Düse
- 52: Getriebe
- 54: Schneckensegment
- 56: Schneckensegment
- 58: Stirnseite
- 60: Stirnseite
- 62: Ausnehmung
- 64: Ausnehmung
- 66: Schneckenkamm
- 68: Spitze
- 70: Schneckenkamm
- 70': Schneckenkamm
- 72: Schneckenkamm
- 72': Schneckenkamm

## Patentansprüche

1. Extruderwellenvorrichtung für einen gegenläufigen Doppelwellenextruder (12), mit zumindest einer Schneckenwelle (14), welche eine Drehmitnahmekontur (16) aufweist, mit zumindest einem ersten, drehfest auf der Schneckenwelle (14) angeordneten Schneckensegment (18), welches eine erste, zumindest im Wesentlichen konstante Schneckensteigung aufweist, und mit zumindest einem zweiten, drehfest auf der Schneckenwelle (14) angeordneten Schneckensegment (20), welches eine von der ersten Schneckensteigung verschiedene zweite, zumindest im Wesentlichen konstante Schneckensteigung aufweist,
**dadurch gekennzeichnet, dass**
das erste Schneckensegment (18) und das zweite Schneckensegment (20) jeweils eine Stirnseite (22, 24) aufweisen, welche eine zumindest im Wesentlichen identische Form aufweisen.

2. Extruderwellenvorrichtung nach Anspruch 1,
**dadurch gekennzeichnet, dass**
das zweite Schneckensegment (20) mit der Stirnseite (24) direkt an die Stirnseite (22) des ersten Schneckensegments (18) angrenzt.

3. Extruderwellenvorrichtung nach Anspruch 1 oder 2,
**dadurch gekennzeichnet, dass**
die aneinander angrenzenden Stirnseiten (22, 24) des ersten Schneckensegments (18) und des zweiten Schneckensegments (20) deckungsgleich übereinander liegen.

4. Extruderwellenvorrichtung nach einem der vorhergehenden Ansprüche,
**dadurch gekennzeichnet, dass**
das erste Schneckensegment (18) und das zweite Schneckensegment (20) in axialer Richtung (26) jeweils einen Mittenbereich (28, 30) mit einer konstanten Schneckensteigung und einen Übergangsbereich (32, 32', 34, 34') aufweisen, in welchem ein Querschnitt von dem Querschnitt des Mittenbereichs (28, 30) kontinuierlich in einen Querschnitt der Stirnseite (22, 24) übergeht.

5. Extruderwellenvorrichtung nach Anspruch 4,
**dadurch gekennzeichnet, dass**
der Querschnitt des ersten Schneckensegments (18) in dem Mittenbereich (28) wesentlich von dem Querschnitt des zweiten Schneckensegments (20) in dem Mittenbereich (30) verschieden ist, wobei der Querschnitt der Stirnseite (22, 24) von dem Querschnitt des ersten Schneckensegments (18) in dem Mittenbereich (28) und dem Querschnitt des zweiten Schneckensegments (20) in dem Mittenbereich (30) verschieden ist.

6. Extruderwellenvorrichtung zumindest nach Anspruch 4,
**dadurch gekennzeichnet, dass**
eine axiale Erstreckung der Übergangsbereiche (32, 32', 34, 34') der Schneckensegmente (18, 20) jeweils maximal 10% eines Durchmessers des jeweiligen Schneckensegments (18, 20) beträgt.

7. Extruderwellenvorrichtung nach einem der vorhergehenden Ansprüche,
**dadurch gekennzeichnet, dass**
das erste Schneckensegment (18) und das zweite Schneckensegment (20) jeweils zwei Schneckenkämme (36, 36', 38, 38') aufweisen.

8. Extruderwellenvorrichtung nach einem der vorhergehenden Ansprüche,
**gekennzeichnet durch**
ein weiteres Schneckensegment (40), welches drehfest auf der Schneckenwelle (14) angeordnet ist und welches einen Schneckenkamm (42) aufweist.

9. Extruderwellenvorrichtung nach einem der vorhergehenden Ansprüche,
**dadurch gekennzeichnet, dass**
die Schneckenwelle (14) von einer Zahnwelle gebildet ist.

10. Extruderwellenvorrichtung nach einem der vorhergehenden Ansprüche,
**dadurch gekennzeichnet, dass**
die Schneckenwelle (14) dazu vorgesehen ist, ein Antriebsmoment direkt auf die Schneckensegmente (18, 20, 40) zu übertragen, wobei ein Drehmomentfaktor mehr als 16Nm/cm³ beträgt.

11. Gegenläufiger Doppelwellenextruder mit einem Gehäuse (44), mit zwei Extruderwellenvorrichtungen (10, 10') nach einem der vorhergehenden Ansprüche und mit zumindest einer Antriebseinheit (46) zu einem Antrieb der Extruderwellenvorrichtungen (10, 10').

12. Gegenläufiger Doppelwellenextruder nach Anspruch 11,
**dadurch gekennzeichnet, dass**
das erste Schneckensegment (18) und das zweite Schneckensegment (20) der Extruderwellenvorrichtungen (10, 10') dichtkämmend ausgebildet sind.

13. Modulbaukasten für eine Extruderwellenvorrichtung (10) nach einem der Ansprüche 1 bis 10, mit zumindest fünf verschiedenen Schneckensegmenten (18, 20) mit unterschiedlichen Schneckensteigungen, wobei die Schneckensegmente (18, 20) jeweils eine Stirnseite (22, 24) aufweisen, welche eine zumindest im Wesentlichen identische Form aufweist.
